# EUROPÄISCHE PATENTSCHRIFT

(11) **EP 2 014 951 B1**
(45) Veröffentlichungstag und Bekanntmachung des Hinweises auf die Patenterteilung: **02.05.2012**
(21) Anmeldenummer: 08011973.8
(22) Anmeldetag: 03.07.2008
(51) Int. Cl.: F16H 7/08

(54) **Spann- und Dämpfungselement für Synchronriemengetriebe**
Tensioning and damping element for a synchronised belt drive
Elément de serrage et d'amortissement pour transmission à courroie synchrone

(30) Priorität: 10.07.2007 DE 102007031985
(43) Veröffentlichungstag der Anmeldung: 14.01.2009
(73) Patentinhaber: EBERT Kettenspanntechnik GmbH, 04435 Schkeuditz (DE)
(72) Erfinder: Ebert, Siegfried, Dipl.-Ing, 04435 Schkeuditz (DE); Meier, Hartmut, Dipl.-Ing.(FH), 06779 Schierau OT Möst (DE); Nendel, Klaus, Prof. Dr. Ing., 09569 Oederan (DE); Sumpf, Jens, Dr. Ing., 09366 Stollberg (DE)

(56) Entgegenhaltungen:
- EP-A- 1 452 775
- DE-A1- 10 340 966
- JP-A- 5 132 586
- RU-C1- 2 145 385

## Beschreibung

Die Erfindung betrifft ein Spann- und Dämpfungselement für Synchronriemengetriebe. Sie ist anwendbar im Maschinenbau.

Synchronriemen werden als Zugmittel zur synchronen Übertragung von Drehmomenten in allen Bereichen des Maschinenbaus eingesetzt. Bedingung für die Momentübertragung, die Drehphasenpräzision und die Betriebssicherheit ist die genaue Einstellung und Einhaltung der Vorspannkraft des Riemens.

Durch die DE 103 40 966 B4 ist ein Spann- und Dämpfungselement für Riemengetriebe bekannt, welches als ringförmiges, elastisch rotational verformbares Element zwischen Lasttrum und Leertrum angeordnet ist und ständig auf beide Trume mit gleicher diametral gerichteter Spannkraft und gleicher Dämpfung wirkt.

Es besteht aus einen rotational elastischen Käfig mit der geometrischen Grundform eines Kreiszylinders, bestehend aus zwei die gleiche Biegesteifigkeit aufweisenden elastischen Arbeitsringen und zwischen diesen und parallel zur Rotationsachse angeordneten, radial innenseitig im Bereich der neutralen Biegefaser der Arbeitsringe verlaufenden, um ihre Längsachse in den Übergängen zu den Arbeitsringen elastisch schwenkbar und mit einer zum Synchronriemen formkorrespondenten Teilung angeordneten Zahnstegen, deren Breite kleiner ist als die Zahnlückenweite des Synchronriemens bei dessen maximaler Krümmung im Leertrum.

Bei seiner Rotation mit großer Verformungsleistung infolge großer Spannkraft, großer Verformungswege und hoher Drehzahlen entsteht in den Arbeitsringen und an seinen Kontaktstellen zum Synchronriemen sowie am Zahnprofil des Synchronriemens Wärme.

Die Problematik der Wärmeentstehung besteht vor allem dann, wenn das Synchronriemengetriebe mit einer geschlossenen Schutzvorrichtungen umbaut ist.

Die Wärme verändert nachteilig die mechanischen, insbesondere elastischen Kennwerte des Spann- und Dämpfungselementes und des Synchronriemens, so dass bezüglich der Funktion und der Zuverlässigkeit bis zum thermischen Versagenskriterium das Anwendungsgebiet eingeschränkt ist.

Die technische Ursache dieses Nachteils ist innere Reibung in den verformten Bereichen, Reibung an den Kontaktstellen von Spann- und Dämpfungselement und Synchronriemen und unzureichende Wärmeableitung an die Umgebung.

Ziel der Erfindung ist ein Spann- und Dämpfungselement für Synchronriemengetriebe mit verbesserter Wärmebilanz.

Aufgabe der Erfindung ist ein Spann- und Dämpfungselement für Synchronriemengetriebe bereitzustellen, welches verringerte innere Reibung, geringere Reibung an den Kontaktstellen zum Synchronriemen und größere Wärmeableitung an die Umgebung aufweist.

Die Aufgabe wird durch die Merkmale des Anspruchs 1 gelöst.

Das erfindungsgemäße Spann- und Dämpfungselementes besteht aus einem offenzelligen oder/und pörösem Werkstoff, gebildet aus elastischem Grundwerkstoff im Ein- oder Mehrstoffsystem.

Die dominierende Struktur offenzelliger beziehungsweise poröser Werkstoffe ist die Raumgitterstruktur. Unter Einfluss von äußeren Kräften, wie sie funktionsgemäß auf das Spann- und Dämpfungselement wirken, kommt es zu einer indifferenten elastischen Verformung dieser Raumgitterstruktur mit erheblich reduzierter innerer Reibung, so dass die Wärmeentwicklung durch Verlustarbeit geringer ist.

Hinsichtlich der Ableitung von Wärme an die Umgebung erfolgt diese verstärkt durch die Raumgitterstruktur mit der typisch stark vergrößerten, auf den Grundwerkstoff bezogenen spezifischen Oberfläche.

Zur weiteren Verringerung der Erwärmung des Spann- und Dämpfungselementes, insbesondere in den Kontaktbereichen zum Synchronriemen sind die Leerstellen des Raumgitters oder die Oberfläche des Raumgitters mit einem Kühl- Schmiermittel, welches eine größere Wärmeleitfähigkeit als Luft hat, gefüllt, beziehungsweise benetzt.

Das Kühl-Schmiermittel wird durch die während der Rotation des Spann- und Dämpfungselementes wirkende Zentrifugalkraft in die außenliegenden Oberflächen bewegt.

Damit erfolgt einerseits eine Schmierfunktion im Kontakt zum Zahnriemen, andererseits die verstärkte Ableitung von Wärme aus den der elastischen Verformung unterliegenden Bereichen. Das ist zugleich mit der zusätzlichen Schmierung des gesamten Synchronriemengetriebes verbunden.

Der rotational elastische Käfig des Spann- und Dämpfungselementes weist mehrere axial paarweise gegenüberliegende und mehrere radial mit Abstand ineinander angeordnete elastische Arbeitsringe auf. Diese Arbeitsringe sind das die Spannkraft und Dämpfung erzeugende Arbeitsorgan des Spann- und Dämpfungselementes.

Jeweils paarweise, bezogen auf ihren Durchmesser, haben diese Arbeitsringe gleiche Biegsteifigkeit. Durch die Ineinander- Anordnung der Arbeitsringe und mit radialem Abstand werden seitlich offene Kanäle geschaffen, welche insbesondere bei Rotation des Spann- und Dämpfungselementes vom Luftstrom durchströmt werden und einen Luft-Kühleffekt zur Verbesserung der Wärmeableitung bewirken.

Zwischen den Arbeitsringen und parallel zur Rotationsachse verlaufen radial innenseitig angeordnete leitschaufelförmige Zahnstege ohne Verbindung zu einer gemeinsamen Achse.

Diese Zahnstege sind das Lagesicherungs- und Antriebsorgan des Spann- und Dämpfungselementes.

Das Spann- und Dämpfungselement mit leitschaufelförmigen Zahnstegen integriert damit ein achsfreies, doppelseitig saugendes Lüfterrad zur Erzeugung eines radialen Kühlstromes durch die Lücken zwischen den Zahnstegen, welcher in den Eingriffsphasen zum Synchronriemen rechtwinklig umgelenkt wird und die seitlich offenen Räume zwischen den Arbeitsringen axial durchströmt und effektiv kühlt.

Der Kühlstrom ist darüber hinaus auch auf die Zahnköpfe des Synchronriemens gelenkt, wodurch auch dessen Temperatur niedriger gehalten wird und somit weniger Wärme durch Kontakt vom Synchronriemen in das Spann- und Dämpfungselement gelangt. Die Erfindung soll an einem Ausführungsbeispiel näher erläutert werden. Die dazugehörigen Zeichnungen zeigen in
- Figur 1: eine dreidimensionale Ansicht eines Spann- und Dämpfungselementes mit Arbeitsringen und Zahnstegen;

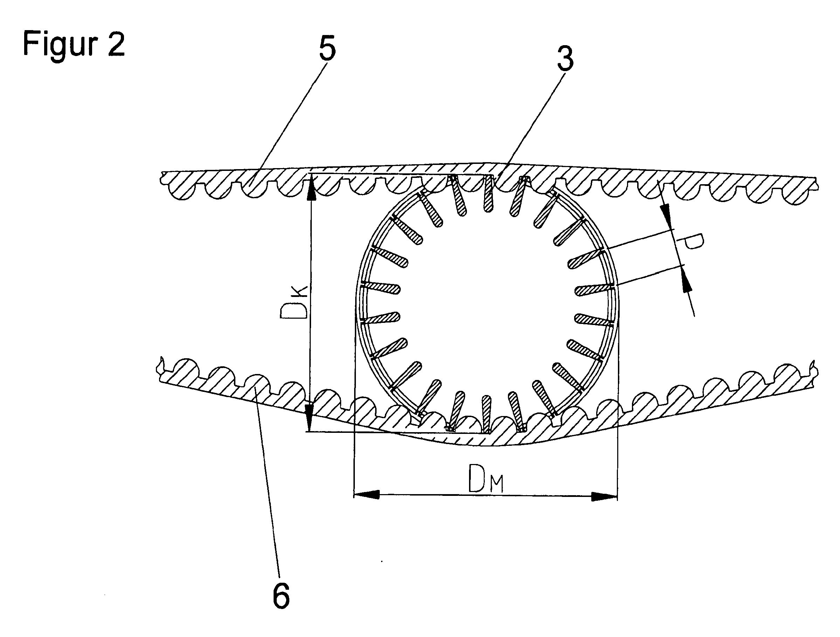

- Figur 2: eine Schnittdarstellung eines Spann- und Dämpfungselementes mit einem mit Zugkraft belasteten Synchronriemen im Last- und Leertrumeingriff.

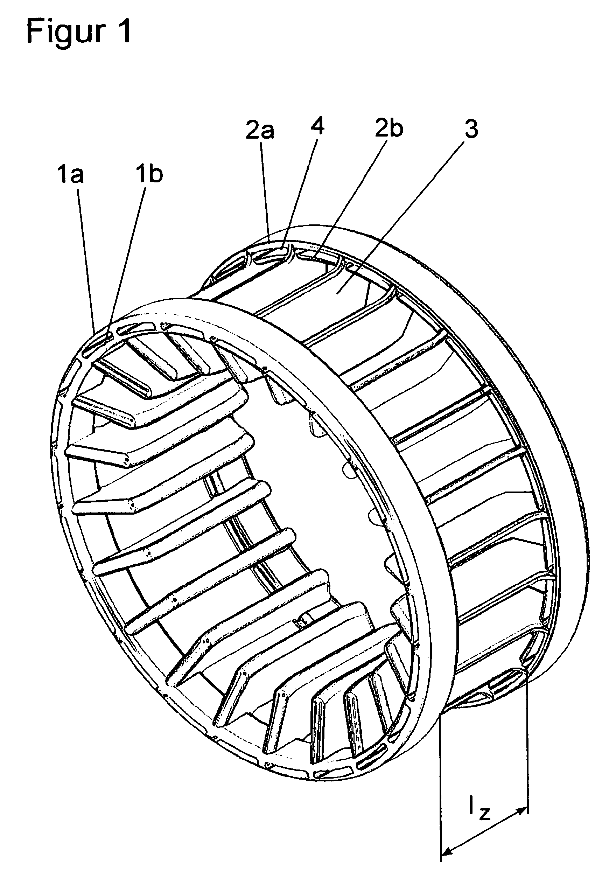

Wie aus Figur 1 ersichtlich, besteht das rotationssymmetrische Spann- und Dämpfungselement aus dem linken Arbeitsringpaar mit den radial ineinander angeordneten Arbeitsringen 1a und 1b, dem rechten Arbeitsringpaar mit den ineinander angeordneten Arbeitsringen 2a und 2b sowie aus den die beiden Arbeitsringpaare einstückig verbindenden Zahnstegen 3. Die Arbeitsringpaare weisen gleiche Biegesteifigkeit auf und sind das Lagesicherungs- und Antriebsorgan des Spann- und Dämpfungselementes.

Die Arbeitsringe sind zueinander ebenengleich im Abstand 1_{z} angeordnet. Der Abstand 1_{z} ist die Summe aus der Synchronriemenbreite und dem üblichen Führungsspiel zwischen Synchronriemen und Zahnscheibe. Die Übergänge zwischen den Arbeitringen und den Zahnstegen verlaufen gerundet.

Innerhalb der Zahnringpaare sind die Arbeitsringe parallel zur Rotationsachse und mit radialem Abstand angeordnet, so dass seitlich offene Kanäle 4 entstehen, welche insbesondere bei Rotation des Spann- und Dämpfungselementes vom Luftstrom durchströmt werden und einen Luft-Kühleffekt zur Verbesserung der Wärmeableitung bewirken. Zugleich werden durch diese Anordnung Masseanhäufungen mit bekanntermaßen schlechter Wärmeableitung vermieden.

Der Mantelkreis D_{M} der Arbeitsringe 1a beziehungsweise 2a ist größer als der die Zahnstege umschließende Kopfkreis D_{K}. Dieser Mantelkreis muss mindestens gleich dem Kopfkreis sein, um die Lagesicherung des Spann- und Dämpfungselementes in der Rotationsebene des Getriebes zu gewährleisten.

Damit ist das Spann- und Dämpfungselement selbsthaltend greiffähig zum Lasttrum 5 und zum Leertrum 6 des Synchronriemens.

Die Zahnstege zwischen den Arbeitsringen sind parallel zur Rotationsachse im Abstand der Teilung p angeordnet und weisen ein leitschaufelformiges Profil ohne Verbindung zu einer gemeinsamen Achse auf.

Als Werkstoff für das Spann- und Dämpfungselement kommt ein elastischer Kunststoff mit offenzelliger Werkstoffstruktur, wie er durch Verschäumen von elastischen Grundwerkstoffen im Einstoffsystem gebildet wird, zur Anwendung.

Hinsichtlich der Ableitung von Wärme an die Umgebung erfolgt diese verstärkt durch die bei Rotation eintretende Durchströmung der Raumgitterstruktur mit der typisch stark vergrößerten, auf den Grundwerkstoff bezogenen spezifischen Oberfläche.

Zur weiteren Verringerung der Erwärmung des Spann- und Dämpfungselementes, insbesondere in den Kontaktbereichen zum Synchronriemen, ist die Oberfläche des Raugmitters mit einem Kühl-Schmiermittel, welches eine grössere Wärmeleitfähigkeit als Luft hat, beispielsweise Glycerin,

Damit wird der Wärmeübergang in die im Strömungsschatten liegenden Oberflächenbereiche des Raumgitters verstärkt und ein weiterer Kühleffekt erreicht. Zugleich wird das Kühl-Schmiermittel durch die während der Rotation des Spann- und Dämpfungselementes wirkende Zentrifugalkraft in die außenliegenden Oberflächen bewegt.

Damit erfolgt eine Schmierfunktion im Kontakt zum Zahnriemen und es wird die durch die Reibung zwischen den Zahnstegen und dem Zahnriemen entstehende Wärme reduziert.

Das ist zugleich mit der zusätzlichen Schmierung des gesamten Synchronriemengetriebes verbunden.

## Patentansprüche

1. Spann- und Dämpfungselement für Synchronriemengetriebe, welches als ringförmiges, elastisch zwischen einer konzentrischen und einer ellipsenähnlichen Form rotational verformbares Element mit der geometrischen Grundform eines Kreiszylinders zwischen Lasttrum (5) und Leertrum (6) angeordnet ist und ständig auf beide Trume mit gleicher diametral gerichteter Spannkraft und gleicher Dämpfung wirkt und welches zum Synchronriemen greiffähig formkorrespondent angeordnete Zahnstege (3), deren Kopfkreis (D_{K}) gleich oder kleiner ist als der Mantelkreis (D_{M}) der Arbeitsringe (1a, 2a), aufweist,
**gekennzeichnet durch**
einen rotational elastischen Käfig mit mehreren, axial paarweise mit gleicher Biegesteifigkeit und gleichen Durchmessern gegenüberliegenden und mehreren radial mit Abstand ineinanderliegend angeordneten elastischen Arbeitsringen (1a, 1b bzw. 2a, 2b) und mit zwischen den Arbeitsringen und parallel zur Rotationsachse verlaufenden, radial innenseitig achsfrei angeordneten, leitschaufelförmigen Zahnstegen (3) sowie eine offenzellige und / oder poröse, ungefüllte oder mit Kühl-Schmiermittel gefüllte oder benetzte Werkstoffstruktur.

## Claims

1. Tension and damping element for synchronous belt drive of annular, elastic design and being rotationally deformable between a concentric shape and an elliptical shape and being arranged between the load strand (5) and the return strand (6) with a geometrical basic shape of a circular cylinder and constantly acting on both strands with identical diametrically oriented tensile force and identical damping and having toothed webs (3) arranged in a prehensile manner and form-correspondent in relation to the synchronous belt, the tip circle (D_{K}) of which is smaller than or equivalent to the outer casing circle (D_{M}) of the working rings (1a, 2a),
**characterized in that**
it has a rotationally elastic cage with several working rings arranged axially opposite in pairs with identical resistance to bending and identical diameters and several working rings (1a, 1b or 2a, 2b respectively) being in radial arrangement and nested inside one another at a distance and having toothed webs (3) shaped like guide blades and being arranged off-axis on the inner side and running between the working rings and in parallel to the axis of rotation and further having an open-celled and / or porous material structure being unfilled or filled with coolant or wetted.

## Revendications

1. Elément de tension et d'amortissement pour engrenage synchrone à courroie dentée étant disposé en tant qu'élément en forme d'anneau de façon élastique entre une forme concentrique et une forme similaire à une ellipse, pouvant se déformer par rotation avec la forme géométrique de base d'un cylindre circulaire entre un brin de charge (5) et un brin vide (6) et agissant constamment sur les deux brins avec la même force de tension et le même amortissement et qui présente des barres crantées (3), dont le cercle extérieur (D_{K}) est égal ou inférieur au cercle d'enveloppement (D_{M}) des anneaux des travail, disposés vers la courroie synchrone prêtes à s'engrener et correspondant à la forme.
**caractérisé en ce que**
il existe une cage élastique de rotation avec plusieurs anneaux de travail en paire disposés axialement de façon opposée ayant la même résistance à la flexion et les mêmes diamètres et plusieurs anneaux élastiques disposés radialement avec distance l'un dans l'autre (1a, 1b et 2a, 2b) et avec des barres crantées (3) en forme de pales fixes disposées hors axe, de façon radiale à l'intérieur, passant entre les anneaux de travail et parallèlement par rapport à l'axe de rotation ainsi qu'une structure de matériau à cellules ouvertes et/ou poreuse, non remplie ou remplie de lubrifiant de refroidissement ou humidifiée.
